# EUROPÄISCHE PATENTSCHRIFT

(11) **EP 1 574 986 B1**
(45) Veröffentlichungstag und Bekanntmachung des Hinweises auf die Patenterteilung: **02.07.2008**
(21) Anmeldenummer: 05005840.3
(22) Anmeldetag: 17.03.2005
(51) Int. Cl.: G06K 9/00, G06T 7/20, G06K 9/46

(54) **Vorrichtung und Verfahren zum Erfassen und Verfolgen von Personen in einem Untersuchungsabschnitt**
Apparatus and method to detect and track persons in a zone of interest
Appareil et procédé de détection et de suivi de personnes dans une zone d'intérêt

(30) Priorität: 17.03.2004 DE 102004012964
(43) Veröffentlichungstag der Anmeldung: 14.09.2005
(73) Patentinhaber: Link, Norbert, Prof. Dr., 76187 Karlsruhe (DE)
(72) Erfinder: Link, Norbert, Prof. Dr., 76187 Karlsruhe (DE)
(74) Vertreter: Eisenführ, Speiser & Partner

(56) Entgegenhaltungen:
- WO-A-02/059836
- US-A1- 2003 107 649
- VINCZE M: "Robust tracking of ellipses at frame rate" PATTERN RECOGNITION, ELSEVIER, KIDLINGTON, GB, Bd. 34, Nr. 2, Februar 2001 (2001-02), Seiten 487-498, XP004321280 ISSN: 0031-3203
- ROSSI M ET AL: "Tracking and counting moving people" PROCEEDINGS OF THE INTERNATIONAL CONFERENCE ON IMAGE PROCESSING (ICIP) AUSTIN, NOV. 13 - 16, 1994, LOS ALAMITOS, IEEE COMP. SOC. PRESS, US, Bd. VOL. 3 CONF. 1, 13. November 1994 (1994-11-13), Seiten 212-216, XP010146433 ISBN: 0-8186-6952-7
- HUANG K S ET AL: "Driver's view and vehicle surround estimation using onmidirectional video stream" INTELLIGENT VEHICLES SYMPOSIUM, 2003. PROCEEDINGS. IEEE JUNE 9-11, 2003, PISCATAWAY, NJ, USA,IEEE, 9. Juni 2003 (2003-06-09), Seiten 444-449, XP010645918 ISBN: 0-7803-7848-2

## Beschreibung

Die vorliegende Erfindung betrifft eine Vorrichtung und ein Verfahren zum Erfassen von Personen in einem Untersuchungsabschnitt.

Bildbasierte Personendetektoren und Personentracker dienen der automatischen Personenzählung, um z. B. Besucher- oder Passagierzahlen zu erfassen. Ein anderes Beispiel für eine automatische Personenzählung stellt ein Drehkreuz mit einer entsprechenden Zählvorrichtung dar. Ferner sind berührungslose Personenzählsysteme wie beispielsweise Lichtschrankensysteme, Passiv-Infrarot-Zähler, Mikrowellen-Radarsysteme oder Laserscannersysteme bekannt.

Auf dem Gebiet der automatischen berührungslosen Personenzählung basierend auf den Daten einer Videokamera sind verschiedene auf einer Bewegungsanalyse beruhenden Techniken und Verfahren bekannt.

US 2003/0107649 A1 zeigt ein Verfahren, bei dem Veränderungen im Bild detektiert werden, wobei die Veränderungen auf einem Vergleich des aktuellen Bildes mit einem Referenzbild beruhen, welches aus einem oder mehreren Bildern in der Vergangenheit, wie beispielsweise eine Hintergrundschätzung, gebildet wird. Hier erweist es sich jedoch als nachteilig, dass in einer dichtgedrängten Menschenmenge oder in Menschengruppen Personen nicht individuell erfasst werden und somit eine genaue Zählung nicht möglich ist. Bei Beleuchtungsänderungen, Schattenwürfen und Reflektionen kann es zu einer Fehldetektion und somit zu einer Falschzählung führen, während stehende Personen aufgrund einer nicht hervorgerufenen Bildänderung nicht wahrgenommen werden. Ferner können mitgeführte Gegenstände wie Trolleys oder Einkaufswagen nicht zuverlässig von Personen unterschieden werden.

In WO 00/21021 oder JP 05258134 erfolgt die Feststellung einer Ähnlichkeit von Bildbereichen basierend auf personen-repräsentativen Grauwertmustern, i.e. Templates. Die derart gefundenen Bereiche dienen dann der Verfolgung der Personen. Die Fülle der Grauwertmuster, welche Menschen unter den vorkommenden Randbedingungen repräsentieren, ist dabei jedoch derart groß, dass aufgrund der Komplexität der benötigten Algorithmen lediglich eine geringe Anzahl von Personen detektiert werden kann.

WO02/059836 offenbart ein System zur Überwachung von Kundenverhalten in einem Supermarkt. Demgemäss werden Aufnahmen von Überkopf-Kamera analysiert, um darin die Köpfe von Personen mittels einer Hough-Transformation zu erkennen und zu zählen. Mittels Kantenerkennung werden diese Personen dann einzeln lokalisiert und ihre Verhaltensmuster festgestellt.

Der Artikel "Robust Tracking of Ellipses at Frame Rate" von Markus Vincze, Pattern Recognition 34 (2001) 487-498 offenbart ein Verfahren zur Echtzeitverfolgung von Ellipsen z. B. für die Steuerung von Servicereobotern.

Der Artikel "Stereo Person Tracking with Adaptive Plan-View Templates of Height and Occupancy Statistics" von Michael Harville, Image and Vision Computing 22 (2004) 127-142, offenbart ein Verfahren zur Erkennung und Verfolgung von Personen auf Basis eines Überkopfbildes, aus dem eine personenspezifische "Höhenschablone" (height template) abgeleitet wird, die zur Beschreibung der verfolgten Person herangezogen wird. Auf dieser Schablone zeichnen sich die Umrisse von Kopf, Schultern und Beinen auf unterschiedlichen Höhen deutlich ab.

Des Weiteren sind Vorrichtungen zur Personendetektion basierend auf (Bild-)Datenströmen einer Videokamera mit einer weiträumigen Schrägsicht oder von Kameras in Automobilen mit einer Seitenansicht bekannt. Diese Verfahren beruhen auf einer periodischen Bewegung von Gliedmaßen beim Gehen oder auf Formmerkmalen in der Seitenansicht wie beispielsweise vertikalen Strukturen, typischen morphologischen Skelettstrukturen sowie lernenden statistischen Verfahren wie beispielsweise künstlichen neuronalen Netzen, um die Personen entsprechend zu detektieren.

Es ist somit Aufgabe der vorliegenden Erfindung, die Erfassung von Personen in einem Untersuchungsabschnitt zu verbessern.

Dies wird durch eine Detektionsvorrichtung nach Anspruch 1 sowie durch ein Verfahren zum Detektieren von Personen in einem Untersuchungsabschnitt gemäß Anspruch 7 gelöst.

Somit wird eine Detektionsvorrichtung zum Erfassen von Personen in einem Untersuchungsabschnitt vorgesehen. Die Detektionsvorrichtung weist eine Kameraeinheit zum Aufnehmen des Untersuchungsabschnitts auf. Dabei ist die Kameraeinheit oberhalb des Untersuchungsabschnitts angeordnet, um den Bereich unterhalb der Kameraeinheit aufzunehmen. Die Kameraeinheit gibt die aufgenommenen Daten dann entsprechend als Bilddaten aus. Die Detektionsvorrichtung weist ferner eine Auswerteeinheit zum Detektieren von strukturellen Formmerkmalen von zumindest einer Person in dem Untersuchungsabschnitt auf. Das Detektieren der strukturellen Formmerkmale erfolgt anhand der von der Kameraeinheit ausgegebenen Bilddaten und dient der Bestimmung der Position von zumindest einer Person in dem Untersuchungsabschnitt.

Somit kann eine Detektion von Personen erfolgen, ohne dass sich die Personen dabei bewegen müssen, um ändernde Bildbereiche hervorzurufen. Ferner können einzelne Personen in dem Untersuchungsabschnitt erfasst werden, auch wenn sie sich innerhalb einer Personengruppe bewegen.

Weiter gemäß der vorliegenden Erfindung beruhen die strukturellen Formmerkmale auf einer Kopfgeometrie und einer Schultergeometrie einer Person.

Gemäß einem weiteren Aspekt der vorliegenden Erfindung erfasst die Auswerteeinheit anhand mindestens einer in dem Untersuchungsabschnitt vorab definierten Linie Übertritte von sich in dem Untersuchungsabschnitt bewegenden Personen über die Linie. Somit können Bewegungen von Personen erfasst und gezählt werden.

Gemäß einem weiteren Aspekt der vorliegenden Erfindung erfasst die Auswerteeinheit einen Aufenthalt von sich in dem Untersuchungsabschnitt bewegenden Personen anhand mindestens eines in dem Untersuchungsabschnitt vorab definierten Bildbereichs.

Gemäß einem weiteren Aspekt der vorliegenden Erfindung gibt die Kameraeinheit die aufgenommenen Bilddaten bildweise aus, und die Position von sich in dem Untersuchungsabschnitt befindlichen Personen wird durch die Auswerteeinheit bildweise bestimmt, um daraus die Bewegungen der Personen zu ermitteln.

Gemäß einem weiteren Aspekt der vorliegenden Erfindung kann die Kameraeinheit als Videokamera oder als Infrarotkamera ausgestaltet sein.

Die Erfindung beruht dabei auf dem Gedanken, eine einfache und produktionstechnisch günstige Vorrichtung zur Personendetektion und zum Personentracking vorzusehen, indem eine Kameraeinheit über einer zu untersuchenden Fläche angebracht wird und die strukturellen Formmerkmale von Personen wie beispielsweise Kopf- und Schultergeometrie, Symmetrie (aus der Ansicht von oben) erkannt und ausgewertet werden.
- Figur 1: zeigt eine schematische Darstellung der Detektionsvorrichtung nach einem ersten Ausführungsbeispiel,
- Figur 2: zeigt eine schematische Darstellung der Detektionsvorrichtung von oben betrachtet, und
- Figur 3: zeigt ein Ergebnis einer Auswertung der Detektionsvorrichtung von Figur 1 und 2.

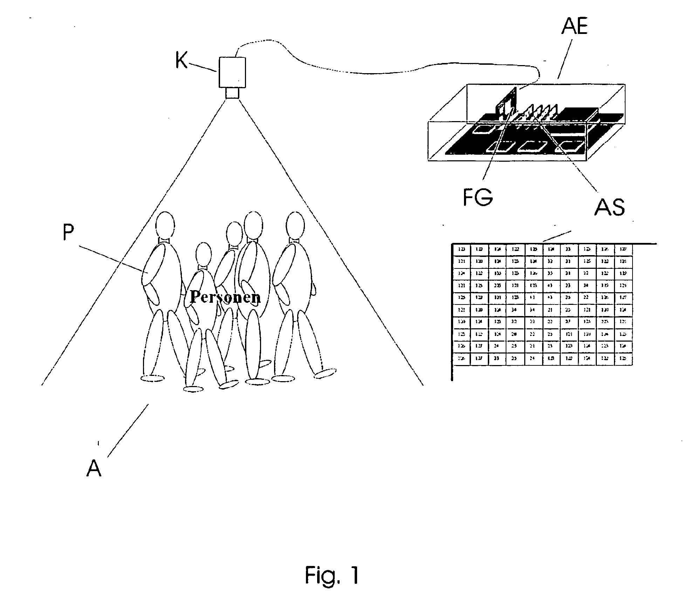

Figur 1 zeigt eine schematische Darstellung einer Detektionsvorrichtung nach einem ersten Ausführungsbeispiel. Die Detektionsvorrichtung weist im Wesentlichen eine Kamera K und eine Auswerteeinheit AE auf. Die Kamera ist dabei oberhalb des zu untersuchenden Bereiches angeordnet, um den Bereich aufzuzeichnen. Dazu weist die Kamera K nach unten zu dem zu untersuchenden Abschnitt A, um die sich in diesem Abschnitt befindlichen Personen P zu detektieren. Die Kamera gibt die erzeugten Bilddaten an die Auswerteeinheit AE aus. Diese Einheit kann dabei einen Computer darstellen. Vorzugsweise weist die Auswerteeinheit AE einen Bilddigitalisierer bzw. einen Frame-Grabber auf. Die Kamera kann dabei eine Standard-1/3"-CCD-B/W-PAL-Videokamera mit einem 4,5 mm Objektiv darstellen. Beispielsweise kann die Kamera vier Meter über dem Boden mit einer senkrecht zum Boden angeordneten optischen Achse angeordnet werden. Der Bilddigitalisierer FG digitalisiert das von der Kamera empfangene analoge Videosignal und gibt einen digitalen Bilddatenstrom beispielsweise über einen PCI-Bus an einen Arbeitsspeicher AS in der Auswerteeinheit AE aus. In der Auswerteeinheit AE erfolgt das Verfahren zur Erkennung und Verfolgung von Personen, welches auf strukturellen Merkmalen bzw. strukturellen Formmerkmalen von Personen basiert. Dabei werden die strukturellen Formmerkmale von Personen erkannt und im Bild lokalisiert und anschließend verfolgt. Zur Lokalisierung des Bildes kann beispielsweise die Kopfposition verwendet.

Die Detektionsvorrichtung gemäß dem ersten Ausführungsbeispiel kann beispielsweise einen bildbasierten Personendetektor bzw. einen Personentracker darstellen. Hierbei wird mittels der Videokamera K eine Szenerie in einem Untersuchungsabschnitt A von oben betrachtet, und die durch die Videokamera K erzeugten Bilddaten werden anschließend in der Auswerteeinheit AE entsprechend ausgewertet. Hierbei werden die Personen anhand ihrer strukturellen Formmerkmale detektiert und anschließend verfolgt. Aus den Trajektorien (Spuren) der verfolgten Personen können Übertritte über frei im Bild definierbare Linien erfasst werden. Ferner können Aufenthalte von verfolgten Personen in frei im Bild definierbaren Feldern gemessen und für eine spätere Auswertung gespeichert werden. Auf vorteilhafte Weise erkennt der bildbasierte Personendetektor/Personentracker Menschen, ohne dabei die Menschen bzw. Personen als sich bewegende Objekte im Bild zu segmentieren und anhand einer Korrelation mit einem Template-Objekt zu verfolgen. Aufgrund der grundlegenden Formmerkmale von dem Kopf und den Schultern sowie ggf. einer Spiegelsymmetrie von Personen, wie sie sich in Bildern in einer Ansicht von oben darstellen, können die jeweiligen Personen detektiert und entsprechend verfolgt werden. Anhand des speziellen geometrischen Zusammenhangs zwischen Kopf und Schultern können Kopf- und Personenhypothesen gebildet werden und für die Erkennung entsprechend verwendet werden. Somit kann auch eine individuelle Detektion und Verfolgung von Menschen in einem sich bewegenden oder stehenden Konglomerat bzw. einer Gruppe erfolgen. Zusätzlich zu den Kopf- und Personenhypothesen können Texturmerkmale zur Personenfilterung verwendet werden, um die Erkennung zu verbessern. Zur weiteren Verbesserung können zusätzlich Texturmerkmale des Grauwert-Gradientenbetrages und/oder Merkmale basierend auf der Richtung des Grauwert-Gradienten verwendet werden. Obwohl oben eine Videokamera beschrieben worden ist, kann die Kameraeinheit K ebenfalls eine Abstandsbild-Kamera, eine Stereokamera, eine Infrarot-Kamera aufweisen oder durch bildgebende Ultraschalltechnik oder bildgebende Radartechnik ausgebildet werden.

Bildbasierte Personendetektoren bzw. Personentracker liefern für jedes Bild von der Videokamera die entsprechende Position der detektierten Personen. Anhand dieser bildweisen Positionsinformationen kann ein Tracking der Person erfolgen, so dass sich Spuren von bewegenden Personen ergeben. Somit können Personenströme durch frei definierbare virtuelle Tore und Aufenthaltsdauern in frei definierbaren Bereichen im überwachten Bildbereich gemessen werden. Die Detektionsvorrichtung gemäß dem ersten Ausführungsbeispiel eignet sich insbesondere für die Erfassung eines Bewegungsverhaltens von Personen sowie deren Analyse, welche beispielsweise zur Verkehrsweg-Optimierung, Personalsteuerung und Personaleinsatzplanung in Verkaufsstellen sowie bei der Belegungsmessung in Verkehrsmitteln verwendet werden.

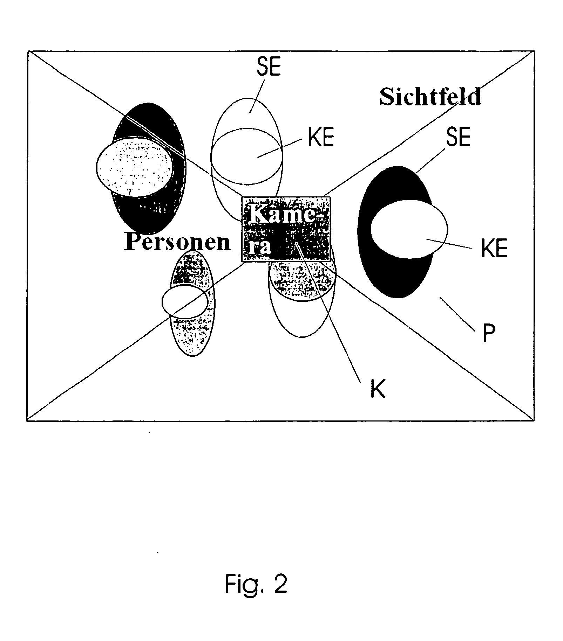

Fig. 2 zeigt eine schematische Darstellung der Detektionsvorrichtung von oben betrachtet. Die Kameraeinheit K zeichnet dabei die Personen in dem Untersuchungsabschnitt A auf. Hierbei werden die Personen P durch die Kopfellipsen KE und die Schulterellipsen SE detektiert. Hierbei gestalten sich sowohl die Kopfellipsen als auch die Schulterellipsen als personenspezifisch, so dass auch unterschiedliche Personen entsprechend detektiert werden können.

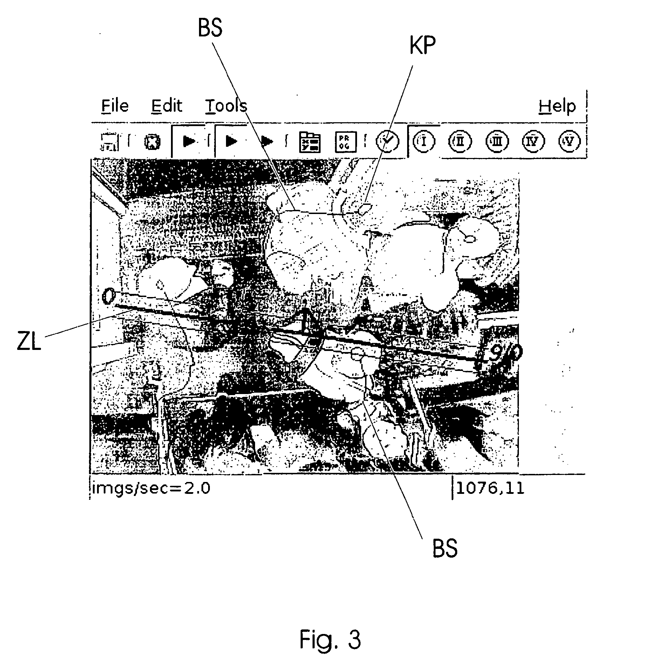

Fig. 3 zeigt ein Auswerteergebnis aus einer Bildsequenz, welche von einer Detektionsvorrichtung gemäß Fig. 1 und 2 aufgezeichnet wurde. Insbesondere ist hier eine eingezeichnete Personendetektion, d. h. Kopfposition KP und eine Bewegungsspur BS sowie virtuelle Zähllinien ZL gezeigt. Hierbei werden Übertritte über die virtuelle Zähllinie gemessen.

Die Detektionsvorrichtung gemäß einem zweiten Ausführungsbeispiel beruht im Wesentlichen auf der Detektionsvorrichtung gemäß dem ersten Ausführungsbeispiel. Die Detektion der Personen erfolgt anhand der grundlegenden Formmerkmale von Kopf und Schultern sowie der Spiegelsymmetrie der Personen, wenn sie von oben betrachtet werden. Die Detektion erfolgt dabei mehrstufig. Als erstes wird das Vorliegen von geometrischen Merkmalen - von oben betrachtet - anhand typischer Umrisslinien geprüft. Diese Umrisslinien stellen jeweils Parameterkurven für den Kopf- und Schulterbereich dar. Diese Parameterkurven können beispielsweise zwei Ellipsen darstellen. Zur Berechung der Parameterkurven bzw. der beiden Ellipsen wird ein Konturbild berechnet, welches einer Parameterschätzung für die Kurven, wie beispielsweise einer Hough-Transformation, unterzogen wird. Die betrachteten Parameterwerte werden auf Bereiche eingeschränkt, welche Parameterkurven ergeben, die den Konturlinien von Personen bzw. Menschen - von oben betrachtet - entsprechen. Anhand von Schätzgütewerten der Parameterschätzung, wie beispielsweise der Höhe der Maxima im Akkumulatorenraum der Hough-Transformation, können entsprechende Strukturen erkannt werden. Wenn somit eine humanomorphe Struktur erfasst wird, kann zur Überprüfung der Hypothese ferner die Symmetrie des Bildbereichs der Hypothese verwendet werden. Dazu wird bezogen auf die Hauptachsen der gefundenen humanomorphen Umrisslinien das Symmetriemaß berechnet und Schwellwerte zur Akzeptanz bzw. zur Ablehnung der Hypothese verwendet. Die akzeptierten Hypothesen stellen dann die einzelnen Personen dar.

Die Parameterkurven können beispielsweise zwei Ellipsen oder zwei Bezier-Kurven für den Kopf- und den Schulterbereich darstellen.

Zur weiteren Überprüfung der Hypothesen können Grauwerte-Texturmerkmale oder Texturmerkmale des Grauwert-Gradientenbetrages und/oder Merkmale basierend auf der Richtung des Grauwert-Gradienten aus dem jeweiligen Hypothese-Bildbereich verwendet werden. Das oben beschriebene stufenartige Verfahren weist den Vorteil auf, das unzutreffende Hypothesen frühzeitig ausgeschlossen und nicht mehr weiter betrachtet werden, um das Verfahren zu beschleunigen. Alternativ zu der stufenweisen Vorgehensweise können ebenfalls zunächst alle Merkmale berechnet und anschließend der resultierende Merkmalsvektor einer Klassifikation unterzogen werden, was jedoch in einem erhöhten Aufwand resultiert.

## Patentansprüche

1. Detektionsvorrichtung zum Erfassen von Personen und deren Bewegung in einem Untersuchungsabschnitt, mit
einer oberhalb des Untersuchungsabschnitts angeordneten Kameraeinheit zum Aufzeichnen des Untersuchungsabschnitts unterhalb der Kameraeinheit und zum Ausgeben der aufgezeichneten Daten als Bilddaten, wobei die Bilddaten bildweise ausgegeben werden, und
einer Auswerteeinheit zum Detektieren von strukturellen Formmerkmalen von zumindest einer Person zur individuellen Identifizierung der Person in dem Untersuchungsabschnitt anhand der von der Kameraeinheit ausgegebenen Bilddaten und zur bildweisen Bestimmung einer Position von zumindest einer Person in dem Untersuchungsabschnitt und zum Ermitteln der Bewegung der individuell identifizierten Person aus den bildweise ermittelten Positionen;
wobei die strukturellen Formmerkmale von oben betrachtet durch die Kopfellipse einer Person und die Schulterellipse einer Person gegeben sind.

2. Detektionsvorrichtung nach Anspruch 1, wobei die Auswerteeinheit dazu ausgestaltet ist, anhand mindestens einer in dem zu detektierenden Abschnitt vorab definierten Linie Übertritte von Personen über die Linie zu erfassen.

3. Detektionsvorrichtung nach einem der Ansprüche 1-2, wobei die Auswerteeinheit dazu ausgestaltet ist, anhand mindestens eines in dem zu detektierenden Abschnitt vorab definierten Bildbereichs den Aufenthalt von Personen zu erfassen.

4. Detektionsvorrichtung nach einem der Ansprüche 1 - 3, wobei die Kameraeinheit eine Videokamera aufweist.

5. Detektionsvorrichtung nach einem der Ansprüche 1-4, wobei die Kameraeinheit eine Infrarotkamera aufweist.

6. Detektionsvorrichtung nach einem der Ansprüche 1-5, wobei die Kameraeinheit eine Abstandsbildkamera oder eine Stereokamera aufweist.

7. Verfahren zum Detektieren von Personen und deren Bewegung in einem Untersuchungsabschnitt, mit den Schritten:
Aufzeichnen eines Untersuchungsabschnitts unterhalb einer Kameraeinheit und bildweises Ausgeben der aufgezeichneten Daten als Bild,
bildweises Detektieren von strukturellen Formmerkmalen von Personen zur individuellen Identifizierung der Person in dem Untersuchungsabschnitt anhand der ausgegebenen Bilddaten,
Bestimmen einer Position von zumindest einer sich in dem Untersuchungsabschnitt befindlichen Person zur individuellen Identifizierung der Person, wobei die strukturellen Formmerkmale von oben betrachtet durch die Kopfellipse und die Schulterellipse einer Person gegeben sind, und
Ermitteln der Bewegung der Person aus den bildweise ermittelten Positionen.

## Claims

1. A detection device to detect persons and their movement in an investigation section, having a camera unit, arranged above the investigation section, to record the investigation section below the camera unit and to output the recorded data as image data, the image data being outputted in image form, and having an evaluation unit to detect structural form features of at least one person for individual identification of the person in the investigation section on the basis of the image data outputted by the camera unit and for image-wise determination of a position of at least one person in the investigation section and for determination of the movement of the individually identified person using the positions determined by way of images; the structural form features viewed from above being provided by the head ellipse of a person and the shoulder ellipse of a person.

2. A detection device according to claim 1, the evaluation unit being designed to detect the crossing of persons over a line by means of at least one line, defined beforehand, in the detection section.

3. A detection device according to any one of claims 1 - 2, the evaluation unit being designed to detect the halt of persons by means of at least one image region, defined beforehand, in the detection section.

4. A detection device according to any one of claims 1 -3, the camera unit having a video camera.

5. A detection device according to any one of claims 1-4, the camera unit having an infrared camera.

6. A detection device according to any one of claims 1 - 5, the camera unit having a distance image camera or a stereo camera.

7. A process for detecting persons and their movement in an investigation section, having the steps:
recordal of an investigation section below the camera unit and image-wise output of the recorded data as an image,
image-wise detection of structural form features of persons for individual identification of the person in the investigation section on the basis of the outputted image data,
determination of a position of at least one person located in the investigation section for individual identification of the person, the structural form features viewed from above being provided by the head ellipse and the shoulder ellipse of a person, and
determination of the movement of the person using the positions determined by way of images.

## Revendications

1. Dispositif de détection pour détecter des personnes et leurs mouvements dans une zone d'observation, comprenant :
une unité à caméra agencée au-dessus de la zone d'observation pour enregistrer la zone d'observation au-dessous de l'unité à caméra et délivrer les données enregistrées sous forme de données images, lesdites données images étant fournies image par image, et
une unité d'évaluation pour détecter des caractéristiques de formes structurelles d'au moins une personne pour identifier individuellement ladite personne dans la zone d'observation à l'aide des données images fournies par l'unité à caméra et pour déterminer, image par image, une position d'au moins une personne dans la zone d'observation et déterminer le mouvement de la personne individuellement identifiée à partir des positions déterminées image par image ;
dans lequel les caractéristiques de formes structurelles, observées depuis le haut, sont constituées par l'ellipse de tête d'une personne et par l'ellipse des épaules d'une personne.

2. Dispositif de détection selon la revendication 1, dans lequel l'unité d'évaluation est conçue pour détecter, à l'aide d'au moins une ligne préalablement définie dans la zone à détecter, des passages de personnes au-dessus de la ligne.

3. Dispositif de détection selon l'une des revendications 1 et 2, dans lequel l'unité d'évaluation est conçue pour détecter la présence de personnes, à l'aide d'au moins une zone image préalablement définie dans la zone à détecter.

4. Dispositif de détection selon l'une des revendications 1 à 3, dans lequel l'unité à la caméra comprend une caméra vidéo.

5. Dispositif de détection selon l'une des revendications 1 à 4, dans lequel l'unité à caméra comprend une caméra à infrarouge.

6. Dispositif de détection selon l'une des revendications 1 à 5, dans lequel l'unité à caméra comprend une caméra à distance ou une caméra stéréo.

7. Procédé pour détecter des personnes et leurs mouvements dans une zone d'observation, comprenant les étapes suivantes :
enregistrement d'une zone d'observation au-dessous d'une unité à caméra et fourniture image par image des données enregistrées sous forme d'images,
détection image par image de caractéristiques de formes structurelles de personnes pour identification individuelle de la personne dans la zone d'observation à l'aide des données images fournies,
détermination d'une position d'au moins une personne qui se trouve dans la zone d'observation, pour l'identification individuelle de la personne, les caractéristiques de formes structurelles étant, observées depuis le haut, l'ellipse de tête et l'ellipse des épaules d'une personne, et
détermination du mouvement de la personne à partir des positions déterminées image par image.
